(19)

Europäisches
Patentamt
European
Patent Office
Office européen
des brevets

(11)  **EP 2 213 698 A1**

(12)  **EUROPEAN PATENT APPLICATION**
published in accordance with Art. 153(4) EPC

(43) Date of publication:
**04.08.2010 Bulletin 2010/31**

(21) Application number: **08849073.5**

(22) Date of filing: **11.11.2008**

(51) Int Cl.:
*C08J 5/18* (2006.01)         *C08G 18/00* (2006.01)
*C08L 33/06* (2006.01)        *C08L 75/00* (2006.01)

(86) International application number:
**PCT/JP2008/070513**

(87) International publication number:
**WO 2009/063870 (22.05.2009 Gazette 2009/21)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority:  **13.11.2007  JP 2007294250**

(71) Applicant: **Nitto Denko Corporation
Ibaraki-shi, Osaka 567-8680 (JP)**

(72) Inventors:
• **IMOTO, Eiichi
  1 (JP)**

• **NAGASAKI, Kunio
  1 (JP)**
• **YOSHIDA, Yoshinori
  DECEASED (JP)**
• **YOSHIDA, Kazuko
  1 (JP)**

(74) Representative: **Grünecker, Kinkeldey,
Stockmair & Schwanhäusser
Anwaltssozietät
Leopoldstrasse 4
80802 München (DE)**

(54)  **COMPOSITE FILM**

(57)    The present invention relates to a composite film including an acrylic polymer and a urethane polymer, in which the acrylic polymer contains an acrylic component including an acrylic acid-based monomer and a monofunctional (meth)acrylic monomer whose homopolymer has a glass transition temperature (Tg) of 0°C or higher, the acrylic acid-based monomer is contained in an amount of from 1% to 30% by weight in the acrylic component, the urethane polymer contains a urethane component obtained by reacting a diol with a diisocyanate, with respect to the amounts of the diol and the diisocyanate, an NCO/OH equivalent ratio is from 1.1 to 2.0, and the composite film contains N,N-dimethylformamide (DMF) soluble matter.

EP 2 213 698 A1

## Description

TECHNICAL FIELD

The present invention relates to a composite film containing an acrylic polymer and a urethane polymer, and particularly relates to a composite film having flexibility and water resistance.

BACKGROUND ART

Composite films of acrylic polymers and urethane polymers are disclosed, for example, in JP-A-2003-96140, JP-A-2003-171411, JP-A-2004-10662 and the like, as films in which high strength is compatible with high breaking elongation. These films have tough physical properties such as high strength and high breaking elongation as films, but have a problem that they are insufficient in flexibility (particularly, flexibility to curved surfaces) and water resistance, for example, when an attempt is made to use them as substrates of pressure-sensitive adhesive sheets for protecting coated surfaces such as automotive coatings.

JP-T-2001-520127 discloses a multilayer film including an interpenetrating polymer network layer (IPN layer) and at least one fluoro-containing polymer layer, as such a pressure-sensitive adhesive sheet for protecting a coated surface. An IPN composite of a urethane polymer and an acrylic polymer is used in the IPN layer of this multilayer film, and is obtained by applying a mixed liquid of an acrylic monomer, an acrylic crosslinking agent and a precursor of a urethane crosslinked substance of a polyol and a polyisocyanate on a substrate and polymerizing and crosslinking the acrylic monomer and the polyol/polyisocyanate as the urethane precursor, respectively, by heat in a noninterference mode.

According to this method, there is an advantage that a limitation (restriction) due to the kind, combination and compounding ratio of monomers used is hard to occur. However, urethane polymerization is a polyaddition reaction which is slow compared to a chain reaction such as acrylic polymerization. Accordingly, in order to promote the reaction as much as possible, it is necessary to add a chemical substance having an environmental load as a catalyst, such as dibutyltin laurate. Moreover, a reaction is further required after film formation at a high temperature of 90°C or more for a period of time as long as several hours. There have been therefore problems in productivity.

When an attempt is made to obtain the IPN layer by utilizing sequential synthesis and photopolymerization as disclosed in JP-A-2003-96140 in order to solve these problems of productivity, the crosslinked urethane polymer comes into a swollen state under the presence of the acrylic monomer and the crosslinking agent. Accordingly, a problem has occurred that the viscosity of syrup significantly increases to make it extremely difficult to apply it on the substrate by coating or casting.

DISCLOSURE OF THE INVENTION

The invention has been made in order to solve the above-mentioned problems, and an object of the invention is to provide a composite film having flexibility and water resistance.

Namely, the present invention relates to the following (1) to (10).

(1) A composite film including an acrylic polymer and a urethane polymer,
in which the acrylic polymer contains an acrylic component including an acrylic acid-based monomer and a monofunctional (meth)acrylic monomer whose homopolymer has a glass transition temperature (Tg) of 0°C or higher, the acrylic acid-based monomer is contained in an amount of from 1% to 30% by weight in the acrylic component, the urethane polymer contains a urethane component obtained by reacting a diol with a diisocyanate, with respect to the amounts of the diol and the diisocyanate, an NCO/OH equivalent ratio is from 1.1 to 2.0, and the composite film contains N,N-dimethylformamide (DMF) soluble matter.
(2) The composite film according to (1), in which the composite film has a gel fraction of 50% to 99.5%.
(3) The composite film according to (1) or (2), in which the acrylic polymer further contains a monofunctional (meth) acrylic monomer whose homopolymer has a glass transition temperature (Tg) of lower than 0°C.
(4) The composite film according to any one of (1) to (3), in which a weight ratio of the acrylic component and the urethane component is within the range of 10/90 to 90/10.
(5) The composite film according to any one of (1) to (4), in which the acrylic component includes the acrylic acid-based monomer in an amount ranging from 1% to 30% by weight, the monofunctional (meth)acrylic monomer whose homopolymer has a glass transition temperature (Tg) of 0°C or higher in an amount ranging from 20% to 99% by weight and the monofunctional (meth)acrylic monomer whose homopolymer has a glass transition temperature (Tg) of lower than 0°C in an amount ranging from 0% to 50% by weight, so that a total weight thereof comes to 100% by weight.

(6) The composite film according to any one of (1) to (5), in which the monofunctional (meth)acrylic monomer whose homopolymer has a glass transition temperature (Tg) of 0°C or higher is at least one selected from acryloyl morpholine and isobornyl acrylate.

(7) The composite film according to any one of (1) to (6), in which the monofunctional (meth)acrylic monomer whose homopolymer has a glass transition temperature (Tg) of lower than 0°C is n-butyl acrylate.

(8) The composite film according to any one of (1) to (7), in which the composite film has an water absorption of 10% or less.

(9) The composite film according to any one of (1) to (8), in which the composite film has a 100% modulus of 0.5 to 11.5 MPa, a breaking elongation of 200% to 1,500% and a breaking strength of 5 to 70 MPa.

(10) The composite film according to any one of (1) to (9), in which the urethane component is obtained by further reacting with a hydroxyl group-containing acrylic monomer.

According to the invention the composite film having flexibility and water resistance can be realized.

BEST MODE FOR CARRYING OUT THE INVENTION

The invention will be described below in detail.

The composite film of the invention contains an acrylic polymer and a urethane polymer. This acrylic polymer is obtained by using an acrylic component including at least an acrylic acid-based monomer and a monofunctional (meth)acrylic monomer whose homopolymer has a glass transition temperature (Tg) of 0°C or higher. In the invention, the acrylic polymer is preferably obtained by using an acrylic component further including a monofunctional (meth)acrylic monomer whose homopolymer has a glass transition temperature (Tg) of lower than 0°C.

In the invention, the acrylic acid-based monomer is a carboxyl group-containing acrylic monomer, and examples thereof include acrylic acid, methacrylic acid, maleic acid and crotonic acid. Of these, acrylic acid is particularly preferred. The content of the acrylic acid-based monomer is from 1% to 30% by weight, and preferably from 2% to 25% by weight, in the acrylic component. When the content of the acrylic acid-based monomer is less than 1% by weight, a long period of time is required for the reaction, and film formation is extremely difficult. Further, a problem of insufficient film strength occurs in some cases. When the content of the acrylic acid-based monomer exceeds 30% by weight, the water absorption of the film increases to cause a problem in water resistance in some cases. Incidentally, the water absorption of the composite film is preferably 10% or less. When the water absorption of the composite film exceeds 10%, the strength of the composite film decreases to cause a possibility of poor appearance. The water absorption of the composite film in the invention is defined by a measuring method described in Examples described later. In the invention, the acrylic acid-based monomer has a great influence on compatibility of the urethane component with the acrylic component, and is an essential constituent element having a very important function.

Incidentally, in the invention, the term "film" is understood to be a concept including a sheet, and the term "sheet" is understood to be a concept including a film.

In the invention, examples of the monofunctional (meth)acrylic monomers having a glass transition temperature (Tg) of 0°C or higher include acryloyl morpholine, isobornyl acrylate, dicyclopentanyl acrylate, t-butyl acrylate, cyclohexyl acrylate and lauryl acrylate. These can be used either alone or as a combination of two or more thereof.

In the invention, it is preferred to use at least one selected from the group consisting of acryloyl morpholine, isobornyl acrylate and dicyclopentanyl acrylate as the monofunctional (meth)acrylic monomer having a glass transition temperature (Tg) of 0°C or higher. It is more preferred to use acryloyl morpholine and/or isobornyl acrylate, or acryloyl morpholine and/or dicyclopentanyl acrylate, and particularly, it is preferred to use isobornyl acrylate.

The content of the monofunctional (meth)acrylic monomer having a glass transition temperature (Tg) of 0°C or higher is preferably from 20% to 99% by weight, and more preferably from 30% to 98% by weight, in the acrylic component. When the content of this monofunctional (meth)acrylic monomer is less than 20% by weight, the problem of insufficient film strength occurs in some cases. When it exceeds 99% by weight, the rigidity of the film excessively increases to result in brittleness in some cases.

In the invention, examples of the monofunctional (meth)acrylic monomers having a glass transition temperature (Tg) of lower than 0°C include n-butyl acrylate, 2-ethylhexyl acrylate, isooctyl acrylate, isobutyl acrylate, 2-methoxyethyl acrylate, tetrahydrofurfuryl acrylate, phenoxyethyl acrylate, ethoxyethyl acrylate and 3-methoxybutyl acrylate. These can be used either alone or as a combination of two or more thereof.

In the invention, it is particularly preferred to use n-butyl acrylate as the monofunctional (meth)acrylic monomer having a glass transition temperature (Tg) of lower than 0°C.

The monofunctional (meth)acrylic monomer having a glass transition temperature (Tg) of lower than 0°C may not be contained (the content thereof is 0% by weight). However, when it is contained, the content thereof is from more than 0% by weight to 50% by weight, and more preferably from more than 0% by weight to 45% by weight, in the acrylic component. When the content of this monofunctional (meth)acrylic monomer exceeds 50% by weight, the problem of insufficient film strength occurs in some cases.

The kind, combination, used amount and the like of the acrylic monomers are appropriately determined, taking into account compatibility with urethane, polymerizability at the time of photocuring by radiation and the characteristics of the resulting polymer.

In the invention, monomers such as vinyl acetate, vinyl propionate, styrene, acrylamide, methacrylamide, a monoester or diester of maleic acid and a derivative thereof, N-methylolacrylamide, glycidyl acrylate, glycidyl methacrylate, N,N-dimethylaminoethyl acrylate, N,N-dimethylaminopropylmethacrylamide, 2-hydroxypropyl acrylate, N,N-dimethylacrylamide, N,N-diethylacrylamide, imide acrylate, N-vinylpyrrolidone, oligoester acrylate, ε-captolactone acrylate, dicyclopentanyl (meth)acrylate, dicyclopentanyl (meth)acrylate, methoxylated cyclododecatriene acrylate and methoxyethyl acrylate may be copolymerized together with the above-mentioned acrylic monomers. Incidentally, the kind and used amount of these monomers to be copolymerized are appropriately determined, taking into account the characteristics of the composite film and the like.

Further, other polyfunctional monomers can also be added within the range not impairing the characteristics. Examples of the polyfunctional monomers include ethylene glycol di(meth)acrylate, propylene glycol di(meth)acrylate, hexanediol di(meth)acrylate, neopentyl glycol di(meth)acrylate, trimethylolpropane tri(meth)acrylate, pentaerythritol tri (meth)acrylate, dipentaerythritol hexa(meth)acrylate, urethane acrylate, epoxy acrylate and polyester acrylate, and particularly preferred is trimethylolpropane tri(meth)acrylate.

The polyfunctional monomer can be contained in an amount of 1 to 20 parts by weight based on 100 parts by weight of the acrylic monomers. When the content of the polyfunctional monomer is 1 part by weight or more, the cohesive force of the composite film is sufficient. When it is 20 parts by weight or less, the elastic modulus does not become too high, and the film can follow an unevenness of a surface of an adherend.

The urethane polymer contains a urethane component obtained by reacting a diol with a diisocyanate. A catalyst is generally used in the reaction of a hydroxyl group of the diol and the diisocyanate. According to the invention, however, the reaction can be promoted even without using a catalyst which induces an environmental load, such as dibutyltin laurate or tin octoate.

Examples of the diols having low molecular weight include dihydric alcohols such as ethylene glycol, diethylene glycol, propylene glycol, butylene glycol and hexamethylene glycol.

Further, examples of the diols having high molecular weight include polyether polyols obtained by addition polymerization of ethylene oxide, propylene oxide, tetrahydrofuran and the like, polyester polyols composed of polycondensation products of the above-mentioned dihydric alcohols or alcohols such as 1,4-butanediol and 1,6-hexanediol and dibasic acids such as adipic acid, azelaic acid and sebacic acid, acrylic polyols, carbonate polyols, epoxy polyols and caprolactone polyols. Of these, for example, polyoxytetramethylene glycol (PTMG), polyalkylene carbonate diol (PCD) and the like are preferably used.

Examples of the acrylic polyols include copolymers of hydroxyl group-containing substances and acrylic monomers, in addition to copolymers of hydroxyl group-containing monomers. Examples of the epoxy polyols include amine-modified epoxy resins.

The diol used in the invention is a linear diol, and contains no branched structure. Further, the urethane polymer formed also contains no crosslinked structure. Accordingly, it is structurally completely different from an IPN structure.

In the invention, the above-mentioned diols can be used either alone or in combination, taking into account solubility in the acrylic monomers, reactivity with the isocyanate, and the like. When the strength is required, it is effective to increase the amount of urethane hard segments by a low molecular weight diol. When an importance is laid on the elongation, it is preferred to use a large molecular weight diol alone. Further, the polyether polyols are generally inexpensive and have good water resistance, and the polyester polyols have a high strength. In the invention, the kind and amount of polyol can be freely selected depending on the use and purpose, and the kind, molecular weight and used amount of the polyol can be appropriately selected also from the viewpoints of characteristics of the substrate to be coated, reactivity with the isocyanate, compatibility with the acrylic monomers, and the like.

Examples of the diisocyanates include aromatic, aliphatic and alicyclic diisocyanates and dimers and trimers of these diisocyanates. As the aromatic, aliphatic and alicyclic diisocyanates, tolylene diisocyanate, diphenylmethane diisocyanate, hexamethylene diisocyanate, xylylene diisocyanate, hydrogenated xylylene diisocyanate (HXDI), isophorone diisocyanate, hydrogenated diphenylmethane diisocyanate, 1,5-naphthylene diisocyanate, 1,3-phenylene diisocyanate, 1,4-phenylene diisocyanate, butane-1,4-diisocyanate, 2,2,4-trimethylhexamethylene diisocyanate, 2,4,4-trimethylhexamethylene diisocyanate, cyclohexane-1,4-diisocyanate, dicyclohexylemthane-4,4-diisocyanate, 1,3-bis(isocyanatomethyl)cyclohexane, methylcyclohexane diisocyanate, m-tetramethylxylylene diisocyanate and the like may be mentioned. Further, there are used dimers and trimers thereof and polyphenylmethane diisocyanate. Examples of the trimers include isocyanurate types, biuret types and allophanate types, and it can be appropriately used.

These diisocyanates can be used either alone or in combination thereof. The kind, combination and the like of the diisocyanate may be appropriately selected from the viewpoints of characteristics of the substrate to which the composite film is applied (coating and the like is performed), solubility in the acrylic monomers, reactivity with the hydroxyl group, and the like.

In the invention, with respect to the amounts of the diol component and the diisocyanate component for forming the urethane polymer, the used amount of the diol component to the diisocyanate component is determined so that NCO/OH (equivalent ratio) is preferably from 1.1 to 2.0, and more preferably from 1.15 to 1.35. When the NCO/OH (equivalent ratio) is 1.1 or more, the sufficient film strength is retained. On the other hand, when the NCO/OH (equivalent ratio) is 2.0 or less, the elongation and flexibility can be sufficiently maintained.

A hydroxyl group-containing acrylic monomer may be added to the above-mentioned urethane polymer. A (meth)acryloyl group can be introduced into a molecular end of a urethane prepolymer by adding the hydroxyl group-containing acrylic monomer to give copolymerizability with the acrylic monomers, thereby increasing compatibility of the urethane component with the acrylic component. Thus, S-S characteristics such as breaking strength can also be improved. As the hydroxyl group-containing acrylic monomer, there is used hydroxyethyl (meth)acrylate, hydroxypropyl (meth)acrylate, hydroxybutyl (meth)acrylate, hydroxyhexyl (meth)acrylate or the like. The amount of the hydroxyl group-containing acrylic monomer used is preferably from 0.1 to 10 parts by weight, and more preferably from 1 to 5 parts by weight, based on 100 parts by weight of the urethane polymer.

In the invention, the weight ratio of the acrylic component and the urethane component is preferably within the range of 10/90 to 90/10. Outside the above-mentioned range, it is difficult to keep a balance between the strength and elongation of the composite film.

Additives commonly used, for example, an ultraviolet absorber, an antioxidant, a filler, a pigment, a colorant, a flame retardant, an antistatic agent and the like may be added to the composite film as needed within the range not impairing the effects of the invention. These additives are used in ordinary amounts depending on the kind thereof. These additives may be previously added before the polymerization reaction of the diisocyanate and the diol, or may be added before obtaining the urethane polymer and the acrylic polymer, respectively, by polymerization.

Further, for viscosity adjustment of the coating, a small amount of solvent may be added. The solvent can be appropriately selected from solvents commonly used. Examples thereof include ethyl acetate, toluene, chloroform and dimethylformamide.

The composite film of the invention has N,N-dimethylformamide (DMF) soluble matter. For example, the gel fraction of the composite film is preferably from 50% to 99.5%, more preferably from 60% to 99.5%, and particularly preferably from 75% to 99.5%. The composite film having a gel fraction of 50% to 99.5% has advantages of excellent transparency and solvent resistance and high film strength. In the invention, the N,N-dimethylformamide (DMF) soluble matter can be indicated by the gel fraction, and can be determined, for example, in the following manner. About 0.1 g is weighed from the composite film, wrapped with a 200-mesh stainless steel wire mesh, and placed in N,N-dimethylformamide (DMF), followed by immersion at 40°C for 7 days. Thereafter, the wire mesh is taken out of DMF, and only the composite film is taken out of the wire mesh, followed by drying at 130°C for 2 hours. After cooling, the weight of the film is measured. The weight of the film after immersion in DMF and the weight of the film before immersion are substituted in the following equation to determine the gel fraction.

$$\text{Gel fraction (\%)} = (\text{weight of film after immersion in DMF/weight of film before immersion in DMF}) \times 100$$

The composite film of the invention can be obtained, for example, by applying a coating liquid for the composite film to a release-treated surface of a release-treated polyethylene terephthalate film, placing a transparent separator or the like thereon, irradiating an ultraviolet ray or the like onto it to form the film, and thereafter, removing the release-treated polyethylene terephthalate and the separator. Incidentally, in place of the release-treated polyethylene terephthalate film, an appropriate substrate can also be used. Alternatively, a pressure-sensitive adhesive layer may be provided on a release substrate such as the release-treated polyethylene terephthalate, and the composite film may be formed thereon, Further, after formation of the composite film, a pressure-sensitive adhesive layer separately prepared may be laminated thereon to prepare a laminated sheet of the pressure-sensitive adhesive layer/composite film. Such a laminated sheet of the pressure-sensitive adhesive layer/composite film is suitable as a chipping sheet for protecting an automobile body. Alternatively, the composite film can also be used as such by laminating the composite film on an adhesive applied on an adherend such as an automobile coated surface or an architectural structure.

As the substrates used in the invention, there are used, for example, thermosetting resins and the like, as well as thermoplastic resins such as polyester-based resins such as polyethylene terephthalate (PET) and polybutylene terephthalate (PBT); polyolefinic resins such as polyethylene (FE), polypropylene (PP), high-density polyethylene and biaxially oriented polypropylene; polyimides (PI); polyether ether ketones (PEEK), polyvinyl chloride (PVC); polyvinylidene chloride-based resins; polyamide-based resins; polyurethane-based resins; polystyrenic resins; acrylic resins;

fluororesins; cellulose-based resins; and polycarbonate-based resins. PET is suitable among others when used in processing of precision parts, because it has appropriate hardness. Furthermore, it is preferably used because it is advantageous from the viewpoints of abundance of species and cost. It is preferred that the material of the film is appropriately determined depending on the purpose, the kind of pressure-sensitive adhesive layer to be provided, and the like. For example, when an ultraviolet curing type pressure-sensitive adhesive layer is provided, the film having a high ultraviolet transmittance is preferred.

In the invention, the composite film can be formed, for example, by using the acrylic monomers as a diluent, reacting the diol and the diisocyanate in these acrylic monomers to form the urethane polymer, applying a mixture comprising the acrylic monomers and the urethane polymer as main components on the substrate (release-treated as needed) or the like, and irradiating ionized radiation such as $\alpha$-ray, $\beta$-ray, $\gamma$-ray, neutron ray or electron beam, radiation such as ultraviolet ray, visible light or the like depending on the kind of photopolymerization initiator, and the like, to perform curing.

Specifically, the composite film can also be obtained by dissolving the diol in the acrylic monomers, thereafter, adding the diisocyanate and the like to react it with the diol, thereby performing viscosity adjustment, applying the resultant solution on the substrate or the like, and then, performing curing by using a low-pressure mercury lamp or the like. In this method, the acrylic monomers may be added either at once or portionwise in several times during the urethane synthesis. Further, the diol may be reacted after the diisocyanate is dissolved in the acrylic monomers. According to this method, the molecular weight is not limited, and the polyurethane having a high molecular weight can also be formed. Accordingly, the molecular weight of the polyurethane finally obtained can be designed to an arbitrary size.

In this case, in order to avoid polymerization inhibition caused by oxygen, a release-treated sheet may be placed on the mixture of the urethane polymer and acrylic monomers coated on the substrate to block oxygen. Alternatively, the substrate may be placed in a vessel filled with an inert gas to decrease the oxygen concentration.

In the invention, the kind of radiation or the like, the kind of lamp used for irradiation, and the like may be appropriately selected, and there can be used low-pressure lamps such as a fluorescent chemical lamp, a black light and a sterilizing lamp, high-pressure lamps such as a metal halide lamp and a high-pressure mercury lamp, and the like.

The integrated optical power of ultraviolet ray or the like can be arbitrarily set depending on required characteristics of the film. Generally, the integrated optical power of ultraviolet ray is from 100 to 5,000 mJ/cm$^2$, preferably from 1,000 to 4,000 mJ/cm$^2$, and more preferably from 2,000 to 3,000 mJ/cm$^2$. When the integrated optical power of ultraviolet ray is less than 100 mJ/cm$^2$, no sufficient polymerization degree is obtained in some cases. Exceeding 5,000 mJ/cm$^2$ causes deterioration of the characteristics in some cases.

Further, the temperature at the time of ultraviolet ray irradiation is not particularly limited, and can be arbitrarily set. When the temperature is too high, a termination reaction due to heat or polymerization tends to occur, thus being liable to cause deterioration of the characteristics. It is therefore usually 70°C or lower, preferably 50°C or lower, and more preferably 30°C or lower.

A photopolymerization initiator is contained in the mixture including the urethane polymer and the acrylic monomers as main components. As the photopolymerization initiators, there are preferably used benzoin ethers such as benzoin methyl ether and benzoin isopropyl ether, substituted benzoin ethers such as anisole methyl ether, substituted acetophenones such as 2,2-diethoxyacetophenone and 2,2-dimethoxy-2-phenylacetophenone, substituted alpha-ketols such as 1-hydroxycyclohexyl phenyl ketone and 2-methyl-2-hydroxypropiophenone, aromatic sulfonyl chlorides such as 2-naphethalenesulfonyl chloride, and optically active oximes such as 1-phenyl-1,1-propanedione-2-(o-ethoxycarbonyl)-oxime.

The thickness of the composite film of the invention can be appropriately selected depending on the purpose and the like. For example, in the case of the chipping use used for protecting an automobile body, the thickness of the composite film is preferably from about 50 to 500 $\mu$m, and more preferably from about 100 to 300 $\mu$m.

Although the composite film of the invention can be used as it is, a pressure-sensitive adhesive layer can also be formed on one surface or both surfaces thereof to produce a pressure-sensitive adhesive sheet. The composition of the pressure-sensitive adhesive is not particularly limited, and a general one such as an acrylic or rubber-based one can be used. A method for forming the pressure-sensitive adhesive is also not particularly limited, and there can be applied a method of directly applying a solvent-based or emulsion-based pressure-sensitive adhesive to the composite film and drying it, a method of applying the pressure-sensitive adhesive to release paper to previously form a pressure-sensitive adhesive layer, and laminating the pressure-sensitive adhesive layer on the composite film, and the like. There can also be applied a method of applying a radiation curing type pressure-sensitive adhesive to the composite film, and irradiating both the pressure-sensitive adhesive layer and the composite film with radiation, thereby simultaneously curing the pressure-sensitive adhesive layer and the composite film to form. Incidentally, in this case, the pressure-sensitive adhesive layer and the composite film can also be applied so as to form a multilayer structure.

There is no particular limitation on the thickness of the pressure-sensitive adhesive layer, and it can be arbitrarily set. However, generally, it is preferably from 3 to 100 $\mu$m, more preferably from 10 to 50 $\mu$m, and particularly preferably from 10 to 30 $\mu$m.

Is the invention, the composite film can be laminated with an additional film on one surface or both surfaces thereof. Materials for forming the additional film include, for example, thermosetting resins, as well as thermoplastic resins such as polyester-based resins such as polyethylene terephthalate (PET), polyolefinic resins such as polyethylene (PE) and polypropylene (PP), polyimides (PI), polyether ether ketones (PEEK), polyvinyl chloride (PVC), polyvinylidene chloride-based resins, polyamide-based resins, polyurethane-based resins, polystyrenic resins, acrylic resins, fluororesins, cellulosic resins and polycarbonate resins. Incidentally, the additional film may have a monolayer structure, but may be a film having a multilayer structure of plural layers composed of the same or different kinds of materials.

The composite film of the invention is a composite film containing the acrylic polymer and the urethane polymer, so that high strength and high breaking elongation are compatible with each other. Further, the composite film of the invention includes the acrylic component including acrylic acid, the monofunctional (meth)acrylic monomer having a Tg of 0°C or higher and the monofunctional (meth)acrylic monomer having a Tg of 0°C or lower and the urethane component, and moreover, has soluble matter and gel matter, so that it is excellent in flexibility to curved surfaces and excellent in water resistance.

The composite film of the invention is preferred to have a 100% modulus of 0.5 to 11.5 MPa, a breaking elongation of 200% to 1,500% and a breaking strength of 5 to 70 MPa. Incidentally, the 100% modulus, breaking elongation and breaking strength of the composite film is defined by measuring methods described in Examples described later.

EXAMPLES

The invention will be described below in detail using examples, but the invention should not be construed as being limited thereto. Incidentally, in the following Examples, parts and percentages are by weight, unless otherwise specified.

Example 1

A reaction vessel equipped with a condenser, a thermometer and a stirring device was charged with 10 parts of acrylic acid (AA), 20 parts of acryloyl morpholine (ACMO) and 20 parts of n-butyl acrylate (BA) as acrylic monomers and 36.4 parts of polyoxytetramethylene glycol (PTMG) (number average molecular weight: 650, manufactured by Mitsubishi Chemical Corporation) as a polyol, and 13.6 parts of hydrogenated xylylene diisocyanate (HXDI) was added dropwise with stirring, followed by reaction at 65°C for 10 hours to obtain a urethane polymer-acrylic monomer mixture. Thereafter, 0.25 part of bis(2,4,6-trimethylbenzoyl)phenyl-phosphine oxide (IRGACURE 819, manufactured by Ciba Specialty Chemicals Co., Ltd.) was added as a photopolymerization initiator. Incidentally, with respect to the amounts of the polyisocyanate component and the polyol component used, NCO/OH (equivalent ratio) was 1.25.

The mixture of the urethane polymer and the acrylic monomers was applied on a release-treated surface of a 50-$\mu$m thick release-treated polyethylene terephthalate film (PET film) to a thickness after cured of 220 $\mu$m. A release-treated polyethylene terephthalate (PET) film (thickness: 38 $\mu$m) was laminated thereon as a separator to coat it, and then, a coated separator surface is irradiated with an ultraviolet ray (irradiance: 290 mW/cm$^2$, the integrated optical power: 4,600 mJ/cm$^2$) by using a metal halide lamp to cure the mixture, thereby forming a composite film (provided with the separator) on the release-treated PET film.

For the resulting composite film, evaluation of mechanical properties, measurement of gel fraction and measurement of the water absorption were performed. The results thereof are shown in Table 1.

Example 2

A composite film (provided with the separator) was formed on the release-treated PET film in the same manner as in Example 1 except for changing the kind and used amount of the photopolymerization initiator to use 0.05 part of 1-[4-(2-hydroxyethoxy)-phenyl]-2-hydroxy-2-methyl-1-propan-1-one (IRGACURE 2959, manufactured by Ciba Specialty Chemicals Co., Ltd.).

For the resulting composite film, the same measurement and evaluation as in Example 1 were performed. The results thereof are shown in Table 1.

Example 3

A composite film (provided with the separator) was formed on the release-treated PET film in the same manner as in Example 1 except for changing the kind and blended amount of the acrylic monomers to 5 parts of acrylic acid (AA), 25 parts of acryloyl morpholine (ACMO) and 20 parts of n-butyl acrylate (BA).

For the resulting composite film, the same measurement and evaluation as in Example 1 were performed. The results thereof are shown in Table 1.

Example 4

A composite film (provided with the separator) was formed on the release-treated PET film in the same manner as in Example 1 except for changing the kind and blended amount of the acrylic monomers to 5 parts of acrylic acid (AA), 25 parts of acryloyl morpholine (ACMO) and 20 parts of n-butyl acrylate (BA), and changing the kind and blended amount of the urethane component to 37.2 parts of polyoxytetramethylene glycol (PTMG) (number average molecular weight: 650, manufactured by Mitsubishi Chemical Corporation) and 12.8 parts of hydrogenated xylylene diisocyanate (HXDI). Incidentally, with respect to the amounts of the polyisocyanate component and the polyol component used, NCO/OH (equivalent ratio) was 1.15.
For the resulting composite film, the same measurement and evaluation as in Example 1 were performed. The results thereof are shown in Table 1.

Example 5

A composite film (provided with the separator) was formed on the release-treated PET film in the same manner as in Example 1 except for changing the kind and blended amount of the urethane component to 38 parts of polyalkylene carbonate diol (PCD) (number average molecular weight: 800, trade name: "T5650J", manufactured by Asahi Kasei Corporation) and 12 parts of hydrogenated xylylene diisocyanate (HXDI). Incidentally, with respect to the amounts of the polyisocyanate component and the polyol component used, NCO/OH (equivalent ratio) was 1.25.
For the resulting composite film, the same measurement and evaluation as in Example 1 were performed. The results thereof are shown in Table 2.

Example 6

A composite film (provided with the separator) was formed on the release-treated PET film in the same manner as in Example 1 except for changing the kind and blended amount of the urethane component to 36.7 parts of polyoxytetramethylene glycol (PTMG) (number average molecular weight: 650, manufactured by Mitsubishi Chemical Corporation) and 13.3 parts of hydrogenated xylylene diisocyanate (HXDI), Incidentally, with respect to the amounts of the polyisocyanate component and the polyol component used, NCO/OH (equivalent ratio) was 1.25.
For the resulting composite film, the same measurement and evaluation as in Example 1 were performed. The results thereof are shown in Table 2.

Example 7

A reaction vessel equipped with a condenser, a thermometer and a stirring device was charged with 10 parts of acrylic acid (AA), 20 parts of acryloyl morpholine (ACMO) and 20 parts of n-butyl acrylate (BA) as acrylic monomers and 36.4 parts of polyoxytetramethylene glycol (PTMG) (number average molecular weight: 650, manufactured by Mitsubishi Chemical Corporation) as a polyol, and 13.6 parts of hydrogenated xylylene diisocyanate (HXDI) was added dropwise with stirring, followed by reaction at 65°C for 10 hours to obtain a urethane polymer-acrylic monomer mixture. Then, 1 part of methanol was added to this urethane polymer-acrylic monomer mixture, followed by reaction at 65°C for 2 hours. Thereafter, 0.25 part of bis(2,4,6-trimethylbenzoyl)phenyl-phosphine oxide (IRGACURE 819, manufactured by Ciba Specialty Chemicals Co., Ltd.) was added as a photopolymerization initiator. Incidentally, with respect to the amounts of the polyisocyanate component and the polyol component used, NCO/OH (equivalent ratio) was 1.25.
The mixture of the urethane polymer and the acrylic monomers was applied on a release-treated surface of a 50-$\mu$m thick release-treated polyethylene terephthalate film (PET film) to a thickness after cured of 220 $\mu$m. A release-treated polyethylene terephthalate (PET) film (thickness: 38 $\mu$m) was laminated thereon as a separator to coat it, and then, a coated separator surface is irradiated with an ultraviolet ray (irradiance: 290 mW/cm$^2$, the integrated optical power: 4,600 mJ/cm$^2$) by using a metal halide lamp to cure the mixture, thereby forming a composite film (provided with the separator) on the release-treated PET film.
For the resulting composite film, evaluation of mechanical properties, measurement of gel fraction and measurement of the percentage of water absorption were performed. The results thereof are shown in Table 2.

Example 8

A urethane-acrylic polymer film was formed in the same manner as in Example 1 except for using 5 parts of acrylic acid (AA), 40 parts of isobonyl acrylate (IBXA) and 5 parts of n-butyl acrylate (BA) as the acrylic monomers.

Incidentally, with respect to the amounts of the polyisocyanate component and the polyol component used, NCO/OH (equivalent ratio) was 1.25.

For the resulting composite film, the same measurement and evaluation as in Example 1 were performed. The results thereof are shown in Table 2.

Example 9

A urethane-acrylic polymer film was formed in the same manner as in Example 1 except for adding dropwise 2 parts of hydroxyethyl acrylate (HEA) after the preparation of the urethane-acrylic monomer mixture, followed by reaction at 65°C for 1 hour, in Example 8. Incidentally, with respect to the amounts of the polyisocyanate component and the polyol component used, NCO/OH (equivalent ratio) was 1.25.

For the resulting composite film, the same measurement and evaluation as in Example 1 were performed. The results thereof are shown in Table 3.

Example 10

A urethane-acrylic polymer film was formed in the same manner as in Example 1 except for using 5.5 parts of acrylic acid (AA), 44 parts of isobonyl acrylate (IBXA) and 5.5 parts of n-butyl acrylate (BA) as the acrylic monomers, 32.8 parts of polyoxytetramethylene glycol (PTMG) as the polyol, 12.2 parts of hydrogenated xylylene diisocyanate (HXDI) as the polyisocyanate and 0.275 part of bis(2,4,6-trimethylbenzoyl)phenyl-phosphine oxide (trade name: IRGACURE 819) as the photopolymerization initiator. Incidentally, with respect to the amounts of the polyisocyanate component and the polyol component used, NCO/OH (equivalent ratio) was 1.25.

For the resulting composite film, the same measurement and evaluation as in Example 1 were performed. The results thereof are shown in Table 3.

Example 11

A urethane-acrylic polymer film was formed in the same manner as in Example 9 except for using 5 parts of acrylic acid (AA), 35 parts of isobonyl acrylate (IBXA) and 10 parts of n-butyl acrylate (BA) as the acrylic monomers. Incidentally, with respect to the amounts of the polyisocyanate component and the polyol component used, NCO/OH (equivalent ratio) was 1.25.

For the resulting composite film, the same measurement and evaluation as in Example 1 were performed. The results thereof are shown in Table 3.

Example 12

A urethane-acrylic polymer film was formed in the same manner as in Example 11 except for using 5 parts of acrylic acid (AA) and 45 parts of isobonyl acrylate (IBXA) as the acrylic monomers. Incidentally, with respect to the amounts of the polyisocyanate component and the polyol component used, NCO/OH (equivalent ratio) was 1.25.

For the resulting composite film, the same measurement and evaluation as in Example 1 were performed. The results thereof are shown in Table 3.

Comparative Example 1

A reaction vessel equipped with a condenser, a thermometer and a stirring device was charged with 5 parts of acrylic acid (AA), 25 parts of acryloyl morpholine (ACMO) and 20 parts of n-butyl acrylate (BA) as acrylic monomers and 39.4 parts of polyoxytetramethylene glycol (PTMG) (number average molecular weight: 650, manufactured by Mitsubishi Chemical Corporation) as a polyol, and 10.6 parts of hydrogenated xylylene diisocyanate (HXDI) was added dropwise with stirring, followed by reaction at 65°C for 10 hours to obtain a urethane polymer-acrylic monomer mixture. Thereafter, 0.25 part of bis(2,4,6-trimethylbenzoyl)phenyl-phosphine oxide (IRGACURE 819, manufactured by Ciba Specialty Chemicals Co., Ltd.) was added as a photopolymerization initiator. Incidentally, with respect to the amounts of the polyisocyanate component and the polyol component used, NCO/OH (equivalent ratio) was 0.90.

The mixture of the urethane polymer and the acrylic monomers was applied on a release-treated surface of a 50-$\mu$m thick release-treated polyethylene terephthalate film (PET film) to a thickness after cured of 220 $\mu$m. A release-treated polyethylene terephthalate (PET) film (thickness: 38 $\mu$m) was laminated thereon as a separator to coat it, and then, a coated separator surface is irradiated with an ultraviolet ray (irradiance: 290 mW/cm$^2$, the integrated optical power: 4,600 mJ/cm$^2$) by using a metal halide lamp to cure the mixture, thereby forming a composite film (provided with the separator) on the release-treated PET film.

For the resulting composite film, evaluation of mechanical properties, measurement of gel fraction and measurement of the percentage of water absorption were performed. The results thereof are shown in Table 4.

Comparative Example 2

A composite film (provided with the separator) was formed on the release-treated PET film in the same manner as in Comparative Example 1 except for changing the kind and blended amount of the urethane component to 38.5 parts of polyoxytetramethylene glycol (PTMG) (number average molecular weight: 650, manufactured by Mitsubishi Chemical Corporation) and 11.5 parts of hydrogenated xylylene diisocyanate (HXDI). Incidentally, with respect to the amounts of the polyisocyanate component and the polyol component used, NCO/OH (equivalent ratio) was 1.00.
For the resulting composite film, the same measurement and evaluation as in Example 1 were performed. The results thereof are shown in Table 4.

Comparative Example 3

It was tried to form a film on the release-treated PET film in the same manner as in Comparative Example 1 except for changing the kind and blended amount of the acrylic monomers to 30 parts of acryloyl morpholine (ACMO) and 20 parts of n-butyl acrylate (BA), and changing the kind and blended amount of the urethane component to 36.4 parts of polyoxytetramethylene glycol (PTMG) (number average molecular weight: 650, manufactured by Mitsubishi Chemical Corporation) and 13.6 parts of hydrogenated xylylene diisocyanate (HXDI). However, film formation could not be achieved even after an elapse of 1 week. Incidentally, with respect to the amounts of the polyisocyanate component and the polyol component used, NCO/OH (equivalent ratio) was 1.25.

Comparative Example 4

A reaction vessel equipped with a condenser, a thermometer and a stirring device was charged with 20 parts of acryloyl morpholine (ACMO) and 20 parts of n-butyl acrylate (BA) as acrylic monomers, 36.4 parts of polyoxytetramethylene glycol (PTMG) (number average molecular weight: 650, manufactured by Mitsubishi Chemical Corporation) as a urethane component and 0.025 part of dibutyltin laurate as a urethane reaction catalyst, and 13.6 parts of hydrogenated xylylene diisocyanate (HXDI) was added dropwise with stirring, followed by reaction at 65°C for 4 hours. Then, after 1 part of methanol was added thereto, followed by reaction at 65°C for 2 hours, 10 parts of acrylic acid (AA) was added to prepare a urethane polymer-acrylic monomer mixture. Thereafter, 0.25 part of bis(2,4,6-trimethylbenzoyl)phenylphosphine oxide (IRGACURE 819, manufactured by Ciba Specialty Chemicals Co., Ltd.) was added as a photopolymerization initiator. Incidentally, with respect to the amounts of the polyisocyanate component and the polyol component used, NCO/OH (equivalent ratio) was 1.25.
The mixture of the urethane polymer and the acrylic monomers was applied on a release-treated surface of a 50-$\mu$m thick release-treated polyethylene terephthalate film (PET film) to a thickness after cured of 220 $\mu$m. A release-treated polyethylene terephthalate (PET) film (thickness: 38 $\mu$m) was laminated thereon as a separator to coat it, and then, a coated separator surface is irradiated with an ultraviolet ray (irradiance: 290 mW/cm$^2$, the integrated optical power: 4,600 mJ/cm$^2$) by using a metal halide lamp to cure the mixture, thereby forming a composite film (provided with the separator) on the release-treated PET film. The resulting film showed white.
For the resulting composite film, evaluation of mechanical properties, measurement of gel fraction and measurement of the percentage of water absorption were performed. The results thereof are shown in Table 4.

Evaluation Tests

(1) Evaluation of Mechanical Properties

For the resulting composite film, measurement of 100% modulus, breaking elongation and breaking strength was performed based on the following evaluation methods, as evaluation of mechanical properties.
That is to say, after the resulting composite film was cut to 1 cm wide × 13 cm long, the separator and the release-treated polyethylene film were removed, and a tensile test was performed by using "Autograph ASG-50D Type" (manufactured by Shimadzu Corporation) as a tensile tester at a tensile speed of 200 mm/min, with an inter-chuck distance of 50 mm and at room temperature (23°C) to obtain a stress-strain curve. The stress per unit area at the time when the composite film was stretched by 100% was taken as the 100% modulus.
Further, the stress at the time when the film was broken was determined, and it was taken as the breaking strength. The strain (elongation percentage) at the time when the film was broken was determined, and it was taken as the breaking elongation.

(2) Evaluation of Gel Fraction

About 0.1 g was weighed from the resulting composite film, wrapped with a 200-mesh stainless steel wire mesh, placed in N,N-dimethylformamide (DMF), and immersed therein at 40°C for 7 days. Then, the wire mesh was taken out from DMF, and only the composite film was taken out from the wire mesh and thereafter dried at 130°C for 2 hours. After cooling, the weight of film was measured. The weight of the film after the immersion in DMF and the weight of the film before the immersion were substituted in the following equation to determine the gel fraction.

$$\text{Gel fraction (\%)} = (\text{weight of film after immersion in DMF/weight of film before immersion in DMF}) \times 100$$

(3) Water Absorption

After the resulting composite film was cut to a size of 3 cm × 3 cm, the separator and the release-treated PET film were removed. The weight of this composite film was measured. Then, the composite film was immersed in boiling water of 98°C for 5 minutes, and thereafter taken out therefrom. Water droplets adhered to a surface thereof was removed by dabbing them with paper waste, and immediately, the weight of the film was measured. The weight of the film after the immersion in boiled water and the weight of the film before the immersion were substituted in the following equation to determine the water absorption.

$$\text{Water absorption (\%)} = (\text{weight of film after immersion/weight of film before immersion}) \times 100$$

Table 1

| | | Example 1 | Example 2 | Example 3 | Example 4 |
|---|---|---|---|---|---|
| Acrylic Component | BA | 20 | 20 | 20 | 20 |
| | ACMO | 20 | 20 | 25 | 25 |
| | AA | 10 | 10 | 5 | 5 |
| Photopolymerization Initiator | Irg.819 | 0.25 | | 0.25 | 0.25 |
| | Irg. 2959 | | 0.05 | | |
| Urethane Component | PTMG | 36.4 | 36.4 | 36.4 | 37.2 |
| | HXDI | 13.6 | 13.6 | 13.6 | 12.8 |
| | [NCO]/[OH] | 1.25 | 1.25 | 1.25 | 1.15 |
| Catalyst | | Not used | Not used | Not used | Not used |
| Evaluation | S-S 100% Mod. (MPa) | 5.3 | 5.6 | 3.2 | 5.7 |
| | S-S Breaking Elongation (%) | 586 | 625 | 716 | 524 |
| | S-S Breaking Strength (MPa) | 27.8 | 33.4 | 22,8 | 14 |
| | Gel Fraction (%) | 93.5 | 93.8 | 89.3 | 93.4 |
| | Water Absorption (%) | 6.4 | 6 | 5.8 | 6.2 |

Table 2

| | | Example 5 | Example 6 | Example 7 | Example 8 |
|---|---|---|---|---|---|
| Acrylic Component | BA | 20 | 20 | 20 | 5 |
| | ACMO | 20 | 20 | 20 | |
| | IBXA | | | | 40 |
| | AA | 10 | 10 | 10 | 5 |
| Photopolymerization Initiator | Irg. 819 | 0.25 | 0.25 | 0.25 | 0.25 |
| Urethane Component | PCD | 38 | | | |
| | PTMG | | 36.7 | 36.4 | 36.4 |
| | HXDI (XDI*) | 12 | *13.3 | 13.6 | 13.6 |
| | [NCO]/[OH] | 1.25 | 1.25 | 1.25 | 1.25 |
| | | | | Me-OH 1 | |
| Catalyst | | Not used | Not used | Not used | Not used |
| Evaluation | S-S 100% Mod. (MPa) | 11.1 | 4.4 | 4.2 | 2.7 |
| | S-S Breaking Elongation (%) | 468 | 819 | 484 | 433 |
| | S-S Breaking Strength (MPa) | 40 | 30.2 | 12.8 | 17.1 |
| | Gel Fraction (%) | 95.4 | 92.4 | 76.4 | 92.8 |
| | Water Absorption (%) | 5.1 | 4.6 | 9 | 2.4 |
| * XDI was used in Example 6. | | | | | |

Table 3

| | | Example 9 | Example 10 | Example 11 | Example 12 |
|---|---|---|---|---|---|
| Acrylic Component | BA | 5 | 5.5 | 10 | - |
| | IBXA | 40 | 44 | 35 | 45 |
| | AA | 5 | 5.5 | 5 | 5 |
| Photopolymerization Initiator | Irg. 819 | 0.25 | 0.275 | 0.25 | 0.25 |
| Urethane Component | PTMG | 36.4 | 32.8 | 36.4 | 36.4 |
| | HXDI | 13.6 | 12.2 | 13.6 | 13.6 |
| | [NCO]/[OH] | 1.25 | 1.25 | 1.25 | 1.25 |
| | | HEA 2 | | HEA2 | HEA2 |
| Catalyst | | Not used | Not used | Not used | Not used |

(continued)

|  |  | Example 9 | Example 10 | Example 11 | Example 12 |
|---|---|---|---|---|---|
| Evaluation | S-S 100% Mod. (MPa) | 2.3 | 3.9 | 1.2 | 4.8 |
|  | S-S Breaking Elongation (%) | 458 | 521 | 511 | 343 |
|  | S-S Breaking Strenght (MPa) | 25.3 | 22.9 | 18.6 | 18.1 |
|  | Gel Fraction (%) | 94 | 93.4 | 93.9 | 94.3 |
|  | Water Absorption (%) | 1.8 | 1.8 | 1.6 | 1.4 |

Table 4

|  |  | Comp. Ex. 1 | Comp. Ex. 2 | Comp. Ex. 3 | Comp. Ex. 4 |
|---|---|---|---|---|---|
| Acrylic Component | BA | 20 | 20 | 20 | 20 |
|  | ACMO | 25 | 25 | 30 | 20 |
|  | AA | 5 | 5 | - | Post-added, AA 10 |
| Photopolymerization Initiator | Irg. 819 | 0.25 | 0.25 | - | 0.25 |
|  | Irg. 2959 |  |  |  |  |
| Urethane Component | PTMG | 39.4 | 38.5 | 36.4 | 36.4 |
|  | HXDI | 10.6 | 11,5 | 13.6 | 13.6 |
|  | [NCO]/[OR] | 0.90 | 1.00 | 1.25 | 1.25 |
|  |  |  |  |  | Me-OH 1 |
| Catalyst |  | Not Used | Not used | Not used | DBTL 0.025 |
| Evaluation | S-S 100% Mod. (MPa) | 1.8 | 2.6 | No sheet was formed | - |
|  | S-S Breaking Elongation (%) | 256 | 364 |  | 61 |
|  | S-S Breaking Strength (MPa) | 1.9 | 2.8 |  | 2.2 |
|  | Gel Fraction (%) | 0 | 0 |  | 0 |
|  | Water Absorption (%) | 57.6 | 42.5 |  | 38.7 |

As apparent from Tables 1 to 3, it has been revealed that the composite films of Examples 1 to 12 of the invention have a 100% modulus within the range of 0.5 to 11.5 MPa, a breaking elongation within the range of 200% to 1,500%, a breaking strength within the range of 5 to 70 MPa and an water absorption of 10% or less, and are films having excellent characteristics.

On the other hand, as apparent from Table 4, in Comparative Examples 1 and 2 and Comparative Example 4 in which the gel fraction is 0%, it has been revealed that the breaking strength is less than 5 MPa, being inferior in strength. Further, in Comparative Example 3 in which no acrylic acid is contained, the reaction is extremely slow, and the sheet formation has not been able to be achieved even after an elapse of 1 week. In comparative Example 4 in which acrylic acid is not allowed to be present at the start of the reaction and is added later, it has been revealed that the breaking elongation is 61%, so that the 100% modulus cannot be measured, that the breaking strength is also extremely low, and that the formed film shows white. Furthermore, in Comparative Example 4, the urethane polymerization catalyst is used, which has been unfavorable from the viewpoint of environmental problems.

According to the invention, the composite film having flexibility to curved surfaces and water resistance while satisfying both of high strength and high breaking elongation has been able to be provided.

While the invention has been described in detail with reference to specific embodiments thereof, it will be apparent to one skilled in the art that various changes and modifications can be made without departing from the spirit and scope of the invention.

Incidentally, this application is based on Japanese Patent Application No. 2007-294250 filed on November 13, 2007, the whole of which is incorporated herein by reference.

Further, all references cited herein are incorporated by reference in their entirety.

INDUSTRIAL APPLICABILITY

The composite film of the invention can be suitably used as a film requiring flexibility and water resistance. For example, it can be used as a film for protecting a surface exposed to harmful circumstances such as outdoor weather, solvent, dust and fat and oil, and for decoration. Further, it is also suitable as a chipping sheet for protecting an automobile body.

**Claims**

1. A composite film comprising an acrylic polymer and a urethane polymer,
   wherein the acrylic polymer contains an acrylic component including an acrylic acid-based monomer and a monofunctional (meth)acrylic monomer whose homopolymer has a glass transition temperature (Tg) of 0°C or higher, the acrylic acid-based monomer is contained in an amount of from 1% to 30% by weight in the acrylic component, the urethane polymer contains a urethane component obtained by reacting a diol with a diisocyanate, with respect to the amounts of the diol and the diisocyanate, an NCO/OH equivalent ratio is from 1,1 to 2.0, and the composite film contains N,N-dimethylformamide (DMF) soluble matter,

2. The composite film according to claim 1, wherein the composite film has a gel fraction of 50% to 99.5%.

3. The composite film according to claim 1 or 2, wherein the acrylic polymer further contains a monofunctional (meth) acrylic monomer whose homopolymer has a glass transition temperature (Tg) of lower than 0°C.

4. The composite film according to any one of claims 1 to 3, wherein a weight ratio of the acrylic component and the urethane component is within the range of 10/90 to 90/10.

5. The composite film according to any one of claims 1 to 4, wherein the acrylic component includes the acrylic acid-based monomer in an amount ranging from 1% to 30% by weight, the monofunctional (meth)acrylic monomer whose homopolymer has a glass transition temperature (Tg) of 0°C or higher in an amount ranging from 20% to 99% by weight and the monofunctional (meth)acrylic monomer whose homopolymer has a glass transition temperature (Tg) of lower than 0°C in an amount ranging from 0% to 50% by weight, so that a total weight thereof comes to 100% by weight

6. The composite film according to any one of claims 1 to 5, wherein the monofunctional (meth)acrylic monomer whose homopolymer has a glass transition temperature (Tg) of 0°C or higher is at least one selected from acryloyl morpholine and isobornyl acrylate.

7. The composite film according to any one of claims 1 to 6, wherein the monofunctional (meth)acrylic monomer whose homopolymer has a glass transition temperature (Tg) of lower than 0°C is n-butyl acrylate.

8. The composite film according to any one of claims 1 to 7, wherein the composite film has an water absorption of 10% or less.

9. The composite film according to any one of claims 1 to 8, wherein the composite film has a 100% modulus of 0.5 to 11.5 MPa, a breaking elongation of 200% to 1,500% and a breaking strength of 5 to 70 MPa.

10. The composite film according to any one of claims 1 to 9, wherein the urethane component is obtained by further reacting with a hydroxyl group-containing acrylic monomer.

<table>
<tr><td colspan="2" align="center">**INTERNATIONAL SEARCH REPORT**</td><td>International application No.<br>**PCT/JP2008/070513**</td></tr>
</table>

A. CLASSIFICATION OF SUBJECT MATTER
*C08J5/18*(2006.01)i, *C08G18/00*(2006.01)i, *C08L33/06*(2006.01)i, *C08L75/00*
(2006.01)i

According to International Patent Classification (IPC) or to both national classification and IPC

B. FIELDS SEARCHED

Minimum documentation searched (classification system followed by classification symbols)
C08J5/18, C08G18/00-18/87, C08L1/00-101/00

Documentation searched other than minimum documentation to the extent that such documents are included in the fields searched
Jitsuyo Shinan Koho          1922-1996    Jitsuyo Shinan Toroku Koho   1996-2009
Kokai Jitsuyo Shinan Koho    1971-2009    Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2004-106515 A  (Nitto Denko Corp.),<br>08 April, 2004 (08.04.04),<br>Example 3<br>& US 2004/0126575 A1    & US 2005/0153129 A1<br>& KR 10-2004-0030240 A | 1-10 |
| X | JP 2006-264296 A  (Nitto Denko Corp.),<br>05 October, 2006 (05.10.06),<br>Examples<br>& US 2006/0188725 A1    & EP 1695820 A1<br>& KR 10-2006-0094034 A   & CN 1827367 A | 1-4,6-10 |
| X | JP 2004-107644 A  (Nitto Denko Corp.),<br>08 April, 2004 (08.04.04),<br>Synthesis example 1<br>& US 2004/0126575 A1    & US 2005/0153129 A1<br>& KR 10-2004-0030240 A | 1,2,4,6,8,9 |

☒ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>15 January, 2009 (15.01.09) | Date of mailing of the international search report<br>27 January, 2009 (27.01.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
|---|
| PCT/JP2008/070513 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2003-171411 A  (Nitto Denko Corp.),<br>20 June, 2003 (20.06.03),<br>Example 2<br>(Family: none) | 1,2,4,6,8,9 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003096140 A
- JP 2003171411 A
- JP 2004010662 A
- JP 2001520127 T
- JP 2007294250 A